# EUROPEAN PATENT APPLICATION

(11) **EP 3 018 965 A1**
(43) Date of publication of application: **11.05.2016**
(21) Application number: 15192591.4
(22) Date of filing: 02.11.2015
(51) Int. Cl.: H04W 76/02, H04W 4/02, H04W 48/18

(54) **DEVICE OF HANDLING PROXIMITY SERVICE APPLICATION CODE**

(30) Priority: 05.11.2014 US 201462075260 P; 28.10.2015 US 201514925963
(71) Applicant: HTC Corporation, Taoyuan City 330 (TW)
(72) Inventor: Wu, Chih-Hsiang, 330 Taoyuan City (TW)
(74) Representative: Ljungberg, Robert

(57) **Abstract**

A communication device comprises a processing means configured to execute the instructions of transmitting a first announce request message comprising a proximity service (ProSe) Application ID to a network, when registering to a first public land mobile network (PLMN); receiving a first announcing response message comprising a first ProSe Application Code corresponding to the ProSe Application ID and a value of a first validity timer in response to the first announce request message from the network; switching a registration of the communication device from the first PLMN to a second PLMN; transmitting a second announce request message comprising the ProSe Application ID to the network in response to the switching; and receiving a second announcing response message comprising a second ProSe Application Code corresponding to the ProSe Application ID and a value of a second validity timer in response to the second announce request message from the network.

## Description

### Background of the Invention

### 1. Field of the Invention

The present invention relates to a communication device used in a wireless communication system, and more particularly, to a communication device of handling a proximity service application code in a wireless communication system.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

Device-to-device (D2D) communication may be realized, after an initialization (e.g., connection establishment and/or peer discovery) is performed (e.g., assisted by an eNB). Then, two UEs may communicate (e.g., transmitting and/or receiving packets) with each other directly according to the D2D communication, and the eNB does not need to forward the packets transmitted between the communication devices. According to the D2D communication, the UEs may communicate with each other via UL resources (e.g., UL subframes configured by the eNB). In general, the D2D communication may also be seen as a D2D service (i.e., proximity service (ProSe)). In addition, a D2D subframe, D2D transmission, D2D communication and D2D discovery can be termed as a sidelink subframe, sidelink transmission, sidelink communication and sidelink discovery, respectively.

In the prior art, a scenario where an announcing UE stays in a same public land mobile network (HPLMN) is assumed. However, it can be expected that the announcing UE may occasionally move between different PLMNs in various scenarios. For example, the announcing UE cannot operate regularly in these scenarios according to the prior art. For example, the announcing UE does not know how to process a ProSe Application Code (e.g., for announcing) assigned when registering to the first PLMN, after the announcing UE registers to the second PLMN.

Thus, how to solve the problem of the ProSe Application Code when the announcing UE switches between different PLMNs is an important problem to be solved.

### Summary of the Invention

The present invention therefore provides a communication device for handling a proximity service application code to solve the abovementioned problem.

A communication device for handling a proximity service (ProSe) Application Code comprises a storage unit for storing instructions and a processing means coupled to the storage unit. The processing means is configured to execute the instructions stored in the storage unit. The instructions comprise transmitting a first announce request message comprising a ProSe Application identification (ID) to a network, when registering to a first public land mobile network (PLMN); receiving a first announcing response message comprising a first ProSe Application Code corresponding to the ProSe Application ID and a value of a first validity timer in response to the first announce request message from the network; switching a registration of the communication device from the first PLMN to a second PLMN; transmitting a second announce request message comprising the ProSe Application ID to the network in response to the switching; and receiving a second announcing response message comprising a second ProSe Application Code corresponding to the ProSe Application ID and a value of a second validity timer in response to the second announce request message from the network, wherein the second ProSe Application Code and the first ProSe Application Code are the same if the first validity timer does not expire.

A communication device for handling a proximity service (ProSe) Application Code comprises a storage unit for storing instructions and a processing means coupled to the storage unit. The processing means is configured to execute the instructions stored in the storage unit. The instructions comprise receiving a first announce request message comprising a ProSe Application identification (ID) from a communication device; transmitting a first announcing response message comprising a first ProSe Application Code corresponding to the ProSe Application ID and a value of a first validity timer in response to the first announce request message to the communication device; receiving a second announce request message comprising the ProSe Application ID from the communication device; and transmitting a second announcing response message comprising a second ProSe Application Code corresponding to the ProSe Application ID and a value of a second validity timer in response to the second announce request message to the communication device, wherein the second ProSe Application Code and the first ProSe Application Code are the same if the first validity timer does not expire.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

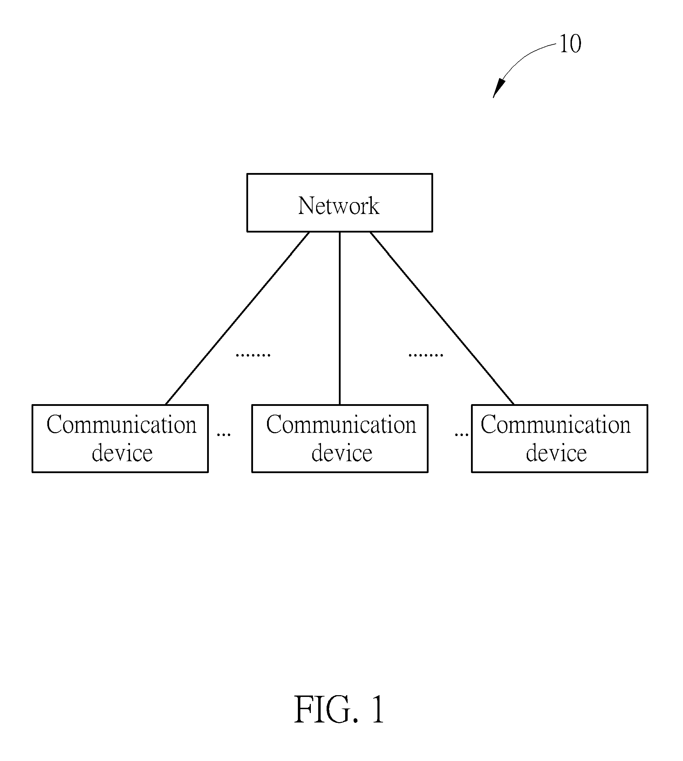

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. A communication device may communicate with the network according to a device-to-cellular (D2C) communication defined in a communication standard, e.g., the 3rd Generation Partnership Project (3GPP) standard. Practically, the network can be a universal terrestrial radio access network (UTRAN) comprising at least one Node-B (NB) in a universal mobile telecommunications system (UMTS). In another example, the network can be an evolved UTRAN (E-UTRAN) comprising at least one evolved NB (eNB) and/or at least one relay in a long term evolution (LTE) system, a LTE-Advanced (LTE-A) system or an evolution of the LTE-A system.

Furthermore, the network may also include both the UTRAN/E-UTRAN and a core network (e.g., evolved packet core (EPC) network), wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), etc.

A communication device may be a user equipment (UE), a low cost device (e.g., machine type communication (MTC) device), a device-to-device (D2D) device, a mobile phone, a laptop, a tablet computer, an electronic book, a portable computer system, or combination thereof. In addition, for the D2C communication, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

In addition, two communication devices may communicate with each other directly, after an initialization (e.g., connection establishment and/or peer discovery) is performed. For example, the initialization may be assisted by the network. That is, the communication devices may communicate (e.g., transmit and/or receive packets) with each other according to a D2D communication (e.g., proximity service (ProSe)) defined in a communication standard, e.g., the 3GPP standard.

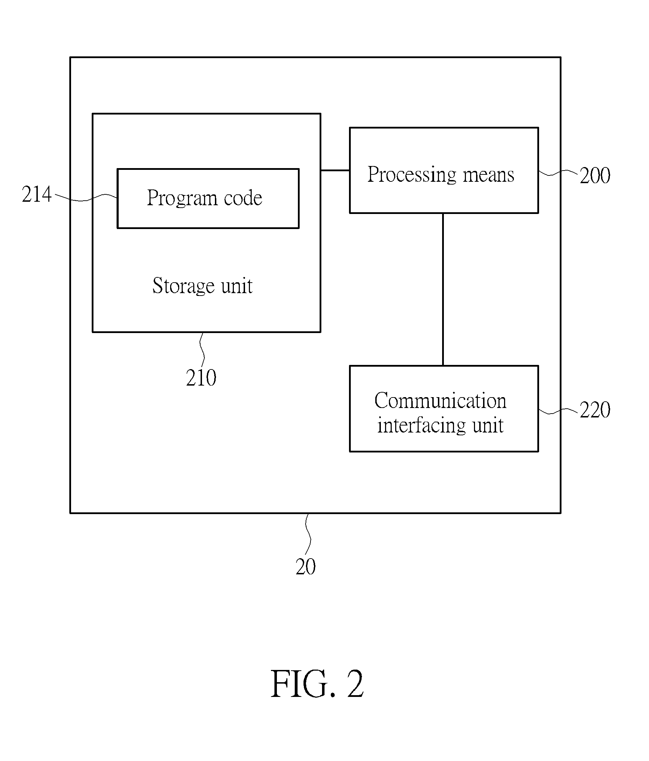

Fig. 2 is a schematic diagram of a communication device 20 according to an example of the present invention. The communication device 20 may be a communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, signals, messages and/or packets) according to processing results of the processing means 200.

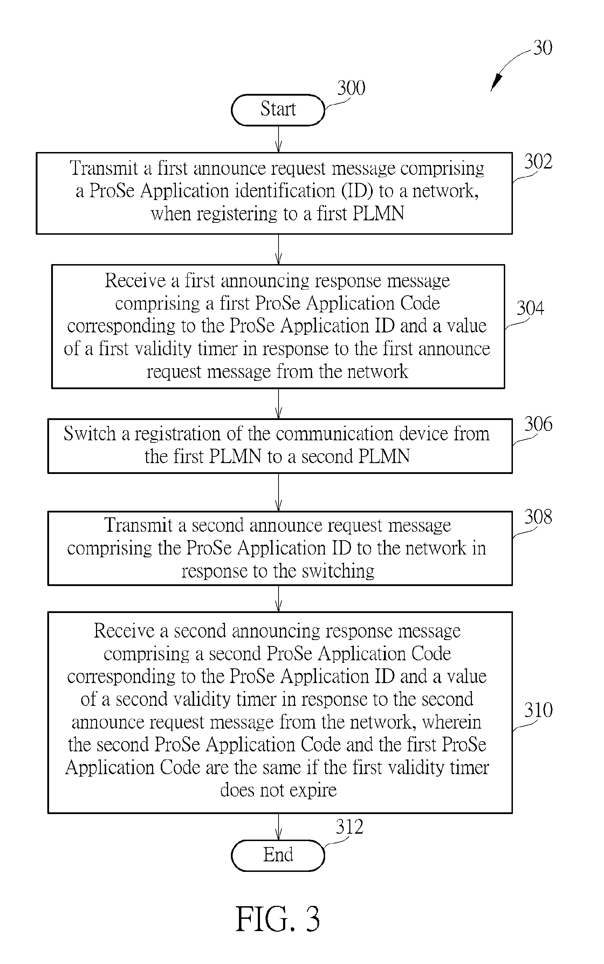

Fig. 3 is a flowchart of a process 30 according to an example of the present invention. The process 30 may be utilized in a communication device in Fig. 1, to handle a ProSe Application Code. The process 30 may be compiled into the program code 214 and includes the following steps:
Step 300: Start.
Step 302: Transmit a first announce request message comprising a ProSe Application identification (ID) to a network, when registering to a first public land mobile network (PLMN).
Step 304: Receive a first announcing response message comprising a first ProSe Application Code corresponding to the ProSe Application ID and a value of a first validity timer in response to the first announce request message from the network.
Step 306: Switch a registration of the communication device from the first PLMN to a second PLMN.
Step 308: Transmit a second announce request message comprising the ProSe Application ID to the network in response to the switching.
Step 310: Receive a second announcing response message comprising a second ProSe Application Code corresponding to the ProSe Application ID and a value of a second validity timer in response to the second announce request message from the network, wherein the second ProSe Application Code and the first ProSe Application Code are the same if the first validity timer does not expire.
Step 312: End.

According to the process 30, the communication device (e.g., announcing UE) may transmit a first announce request message comprising a ProSe Application ID to a network (e.g., an eNB), when registering to a first PLMN. Accordingly, the communication device may receive a first announcing response message comprising a first ProSe Application Code corresponding to the ProSe Application ID and a value of a first validity timer in response to the first announce request message from the network. The communication device may switch a registration of the communication device from the first PLMN to a second PLMN. The situation may occur when the communication device is roaming, e.g., due to mobility of the communication device. The communication device may transmit a second announce request message comprising the ProSe Application ID to the network in response to the switching. Accordingly, the communication device may receive a second announcing response message comprising a second ProSe Application Code corresponding to the ProSe Application ID and a value of a second validity timer in response to the second announce request message from the network, wherein the second ProSe Application Code and the first ProSe Application Code are the same if the first validity timer does not expire. That is, the communication device requests a new ProSe Application Code from the network, when the communication device changes its registered PLMN, i.e., registers to a new PLMN. The new ProSe Application Code and the previously received Prose Application Code are the same, if the previously received validity timer does not expire. Then, the communication device may use the new ProSe Application Code for performing an open direct discovery procedure. Thus, a rule is specified for the communication device and the network according to the process 30. As a result, the communication device and the network can operate regularly, when the communication device changes its registered PLMN.

In one example, the network may include a ProSe function of a home PLMN (HPLMN) of the communication device. That is, the announce request messages and the announce response messages are processed by the ProSe function of the HPLMN in the network. In one example, the communication device may start counting the value of the first validity timer, after receiving the first announcing response message. Further, the communication device may stop counting the value of the first validity timer, before transmitting the second announcing request message. In one example, the communication device may broadcast the second ProSe Application Code, after receiving the second announcing response message. That is, the communication device may broadcast the second ProSe Application Code to perform an open direct discovery procedure. In one example, the value of the second validity timer may be equal to or greater than a remaining time of the first validity timer. In one example, the second ProSe Application Code and the first ProSe Application Code may be different, if the first validity timer expires. That is, the new ProSe Application Code and the previously received Prose Application Code are different, if the previously received validity timer expires.

It should be noted that although the examples are illustrated based on the process 30, to clarify the operations of the communication device. The examples can be combined and/or modified arbitrarily according to system requirements and/or design considerations.

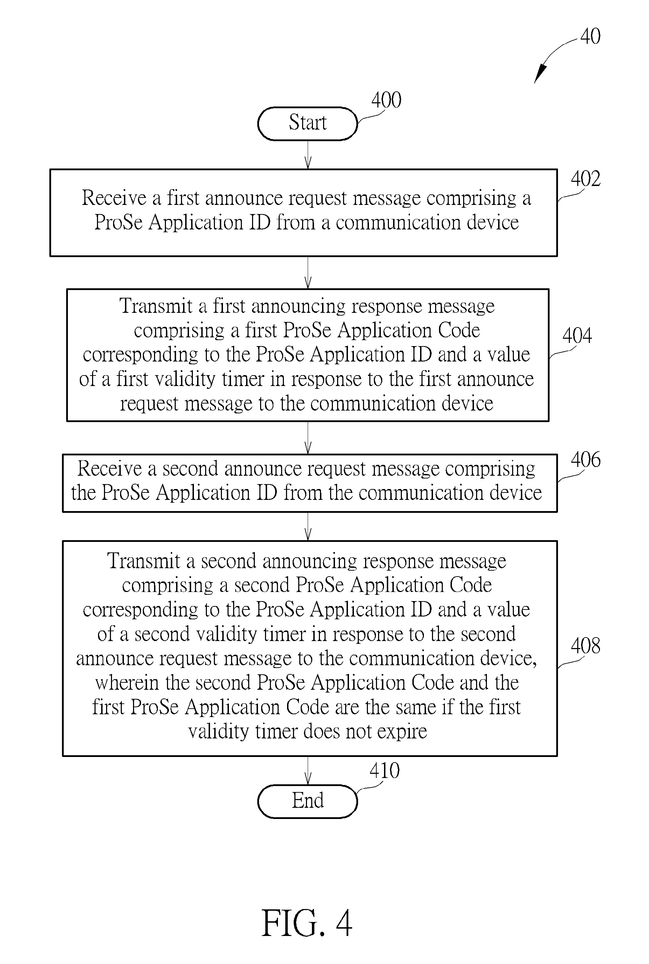

Fig. 4 is a flowchart of a process 40 according to an example of the present invention. The process 40 may be utilized in the network (e.g., eNB) in Fig. 1, to handle a ProSe Application Code. The process 40 may be compiled into the program code 214 and includes the following steps:
Step 400: Start.
Step 402: Receive a first announce request message comprising a ProSe Application ID from a communication device.
Step 404: Transmit a first announcing response message comprising a first ProSe Application Code corresponding to the ProSe Application ID and a value of a first validity timer in response to the first announce request message to the communication device.
Step 406: Receive a second announce request message comprising the ProSe Application ID from the communication device.
Step 408: Transmit a second announcing response message comprising a second ProSe Application Code corresponding to the ProSe Application ID and a value of a second validity timer in response to the second announce request message to the communication device, wherein the second ProSe Application Code and the first ProSe Application Code are the same if the first validity timer does not expire.
Step 410: End.

According to the process 40, the network may receive a first announce request message comprising a ProSe Application ID from a communication device (e.g., announcing UE). Accordingly, the network may transmit a first announcing response message comprising a first ProSe Application Code corresponding to the ProSe Application ID and a value of a first validity timer in response to the first announce request message to the communication device. Later, the network may receive a second announce request message comprising the ProSe Application ID from the communication device. The network may transmit a second announcing response message comprising a second ProSe Application Code corresponding to the ProSe Application ID and a value of a second validity timer in response to the second announce request message to the communication device, wherein the second ProSe Application Code and the first ProSe Application Code are the same if the first validity timer does not expire. That is, the network allocates the same ProSe Application Code to the communication device, if the original validity timer does not expire. Thus, a rule is specified for the network according to the process 40. As a result, the communication device and the network can operate regularly, e.g., when the communication device changes its registered PLMN.

Variations of the process 40 can be referred to the above examples, and are not narrated herein.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s), digital circuit(s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides a communication device for handling a ProSe Application Code. A rule is specified for the communication device and the network. As a result, the communication device and the network can operate regularly, when the communication device changes its registered PLMN.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device for handling a proximity service (ProSe) Application Code, comprising:
a storage unit for storing instructions of:
transmitting a first announce request message comprising a ProSe Application identification (ID) to a network, when registering to a first public land mobile network (PLMN);
receiving a first announcing response message comprising a first ProSe Application Code corresponding to the ProSe Application ID and a value of a first validity timer in response to the first announce request message from the network;
switching a registration of the communication device from the first PLMN to a second PLMN;
transmitting a second announce request message comprising the ProSe Application ID to the network in response to the switching; and
receiving a second announcing response message comprising a second ProSe Application Code corresponding to the ProSe Application ID and a value of a second validity timer in response to the second announce request message from the network, wherein the second ProSe Application Code and the first ProSe Application Code are the same if the first validity timer does not expire; and
a processing means, coupled to the storage unit, configured to execute the instructions stored in the storage unit [2].

2. The communication device of claim 1, wherein the network comprises a ProSe function of a home PLMN (HPLMN) of the communication device.

3. The communication device of claim 1 or 2, wherein the storage unit further stores the instruction of:
starting counting the value of the first validity timer, after receiving the first announcing response message.

4. The communication device of any one of the preceding claims, wherein the storage unit further stores the instruction of:
stopping counting the value of the first validity timer, before transmitting the second announcing request message.

5. The communication device of any one of the preceding claims, wherein the storage unit further stores the instruction of:
broadcasting the second ProSe Application Code, after receiving the second announcing response message.

6. The communication device of any one of the preceding claims, wherein the value of the second validity timer is equal to or greater than a remaining time of the first validity timer.

7. The communication device of any one of the preceding claims, wherein the second ProSe Application Code and the first ProSe Application Code are different if the first validity timer expires.

8. A network for handling a proximity service (ProSe) Application Code, comprising:
a storage unit for storing instructions of:
receiving a first announce request message comprising a ProSe Application identification (ID) from a communication device;
transmitting a first announcing response message comprising a first ProSe Application Code corresponding to the ProSe Application ID and a value of a first validity timer in response to the first announce request message to the communication device;
receiving a second announce request message comprising the ProSe Application ID from the communication device; and
transmitting a second announcing response message comprising a second ProSe Application Code corresponding to the ProSe Application ID and a value of a second validity timer in response to the second announce request message to the communication device, wherein the second ProSe Application Code and the first ProSe Application Code are the same if the first validity timer does not expire; and
a processing means, coupled to the storage unit, configured to execute the instructions stored in the storage unit [1].

9. The network of claim 8, wherein the network comprises a ProSe function of a home public land mobile network (HPLMN) of the communication device.

10. The network of claim 8 or 9, wherein the communication device registers to a ProSe function of another PLMN.

11. The network of any one of the claims 8 to 10, wherein the storage unit further stores the instruction of:
starting counting the value of the first validity timer, after transmitting the first announcing response message.

12. The network of any one of the claims 8 to 11, wherein the value of the second validity timer is equal to or greater than a remaining time of the first validity timer.

13. The network of any one of the claims 8 to 12, wherein the second ProSe Application Code and the first ProSe Application Code are different if the first validity timer expires.
